# EUROPEAN PATENT SPECIFICATION

(11) **EP 1 956 882 B1**
(45) Date of publication and mention of the grant of the patent: **25.04.2012**
(21) Application number: 06820069.0
(22) Date of filing: 28.11.2006
(51) Int. Cl.: A01G 23/06

(54) **APPARATUS FOR TREATMENT OF STUMPS**
VORRICHTUNG ZUR BEHANDLUNG VON STÜMPFEN
APPAREIL POUR TRAITER DES SOUCHES

(30) Priority: 01.12.2005 FI 20051237
(43) Date of publication of application: 20.08.2008
(73) Proprietor: Kareliatech Oy, 80710 Lehmo (FI)
(72) Inventor: MONONEN, Sakari, 81100 Kontiolahti (FI)
(74) Representative: Pitkänen, Hannu Alpo Antero
(86) International application number: PCT/FI2006/000393
(87) International publication number: WO 2007/063166

(56) References cited:
- WO-A1-89/05091
- WO-A1-2004/098268
- FI-B- 62 614
- FI-U1- 6 598
- SU-A1- 472 638
- SU-A1- 529 816
- SU-A1- 536 790
- SU-A1- 1 246 943
- US-A- 4 481 989

## Description

The present invention relates to an apparatus for treatment of stumps, and, in particular, for cutting up, extracting and cleaning tree stumps, comprising a stump extraction grapple mounted onto a turning device attached to a basic machine crane, a frame of said grapple comprising stump-splitting blades with a sharpened leading edge attached by articulated joints, a first set of actuators for turning the stump-splitting blades for the purpose of splitting the stump in between, extraction arms for pulling out stumps, and a second set of actuators for operating the extraction arms, compression arms are attached to the frame, with said arms having a sharpened leading edge to split the stump and the apparatus includes a third set of actuators to turn the compression arms.

One well-known apparatus for pulling out tree stumps is the excavator rake. It consists of a row of power-operated teeth. Another well-known apparatus is fitted with two counter pieces against which a power-operated cutting blade turns to split the tree stump in between into two. Yet another apparatus designed for extracting tree stumps is presented in publication FI 761847. In this solution, the whole tree stump is intended to be pulled out using the tips of the cutting blades and subsequently to be cut up by the application of a compressive force with two pairs of arms applying the force to the tree stump in turns. Publication SU 529816 A presents a tree stump extractor, which corresponds the apparatus described in the preamble of claim 1. The extractor includes power cylinders and primary blades and auxiliary blades, the power cylinders force the auxiliary blades into the root splitting the other sides of the root. The jacks are activated lifting the root from the ground. The extractor is designed to cut up the tree stump into four parts.

The drawback associated with the first two apparatuses is that the tree stump can only be split from one direction, making it difficult to cut it up and requiring each root to be pulled out and cleaned individually, which slows down the operation. Additionally, the apparatuses presented in publications FI 761847 and SU 529816 include a number of drawbacks that effectively prevent the extraction of tree stumps. The most important drawbacks are that the equipment lacks levels to support the tree stump to extract it from the ground and, furthermore, the equipment lacks the holding elements necessary for lifting the tree stump.

Publication FI 761847 proposes that the claws of the cutting arms support the tree stump, but because of the great force required for extracting the tree stump, the claws, equivalent in width to the cutting blade, only serve to split the tree stump being pulled out, failing to extract it from the ground. Moreover, as the claws of the pairs of arms interfere with one another, only one of the pairs can be turned under the tree stump.

The purpose of the invention is to provide an apparatus for handling tree stumps to eliminate the drawbacks discussed above and achieve major improvements in cutting up, extracting and cleaning tree stumps. More specifically, the invention seeks to provide an apparatus that allows tree stumps to be cut up, extracted and cleaned quickly and efficiently.

The purpose of the invention is achieved with an apparatus described in the characterising part of claim 1.

According to the invention said extraction arms are mounted onto said stump-splitting blades, surface plates are attached to the lower edge of said stump-splitting blades, holding arms are attached to said compression arms, and said compression arms and said holdings arms are arranged to press the stump parts against the angle formed by the cutting blades and the surface plates for the duration of the extraction, lifting, and cleaning of tree stumps. When an apparatus in accordance with the invention is used, the tree stump can be split into four parts while still on the ground by the compressive force exerted by the cutting blades, and the four parts can be pulled out in a single lifting operation. Even large tree stumps can be extracted quickly and efficiently as all the tree stump parts can be firmly gripped with the holding arms by pressing the parts against the angle formed by the plates turned under the tree stump and the cutting blades exerting a force from the side for the duration of extraction and lifting. This speeds up the work and ensures that tree stump parts requiring great extraction force are firmly held in position during lifting. Additionally, a major improvement is achieved in tree stump cleaning performance as all the four parts of the tree stump can be cleaned at the same time.

In the following, the invention is presented in greater detail with reference to the attached drawings where:
Figure 1 provides an axonometric view of a tree stump extractor unit consisting of a basic machine, tree stump extraction grapple, and loading space,
Figure 2 provides a view of the tree stump extraction grapple from side a with the grapple grasping the tree stump, the cutting blades in the closed position and the compression arms in the open position,
Figure 3 provides a view of the tree stump extraction grapple as seen from a different side,
Figures 4a through 4c provide a schematic illustration of the extraction and cleaning of a tree stump; in Figure 4a, the apparatus and tree stump are viewed from above, in Figure 4b, the cleaning and holding of the tree stump is viewed from the side, in Figure 4c, the cleaning of the tree stump parts is viewed from the side.

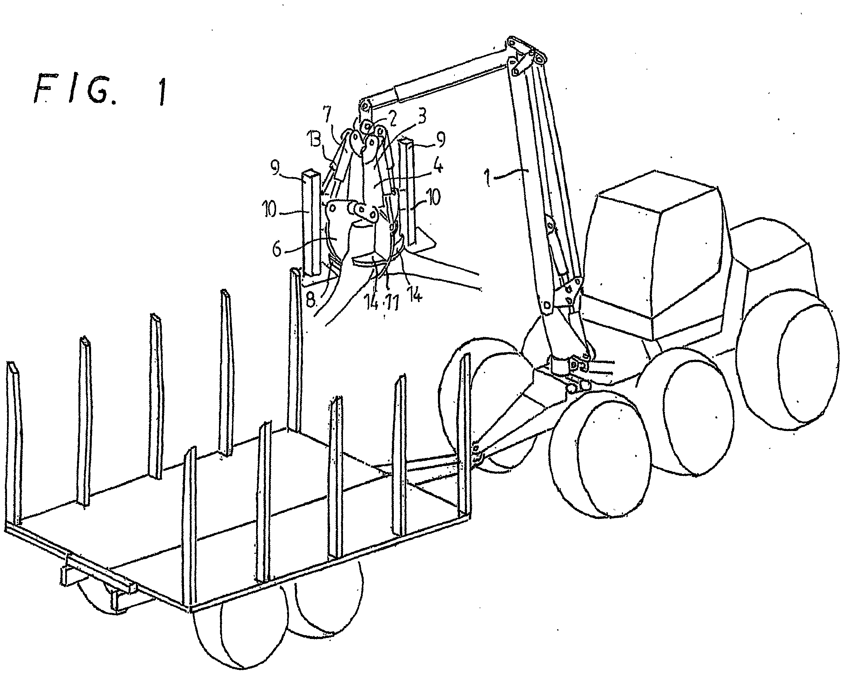

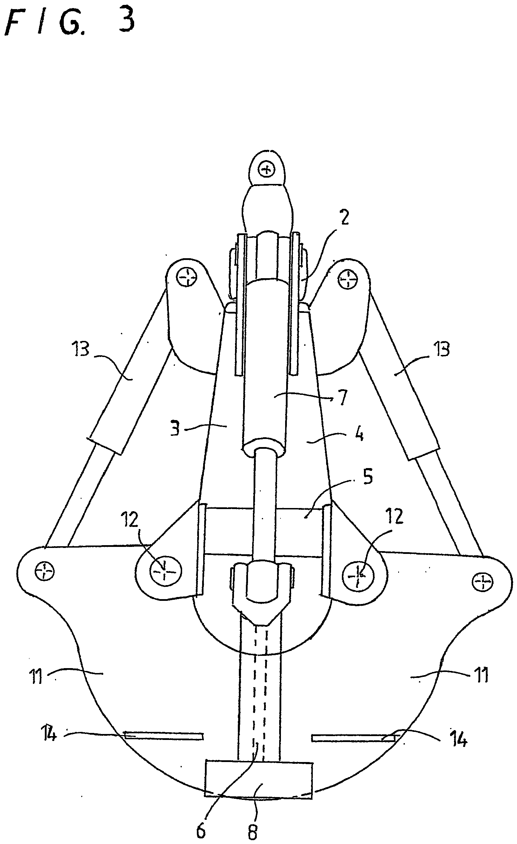

Figures 1 through 4 illustrate an apparatus for extracting, cleaning and transporting tree stumps featuring a tree stump extraction grapple 3 mounted onto a turning device 2 attached to the basic machine crane 1. Attached to the tree stump extraction grapple frame 4 by means of articulated joints 5 are stump-splitting blades 6 with a sharpened leading edge. The apparatus incorporates a first set of actuators 7 arranged to turn the stump-splitting blades towards each other for the purpose of splitting the stump in between. In this application, the actuators 7 consist of hydraulic cylinders attached, at one end, to the frame 4 and, at the other end, to the stump-splitting blades 6. Attached to the lower edge of the stump-splitting blades 6 are surface plates 8 to support the tree stump from below.

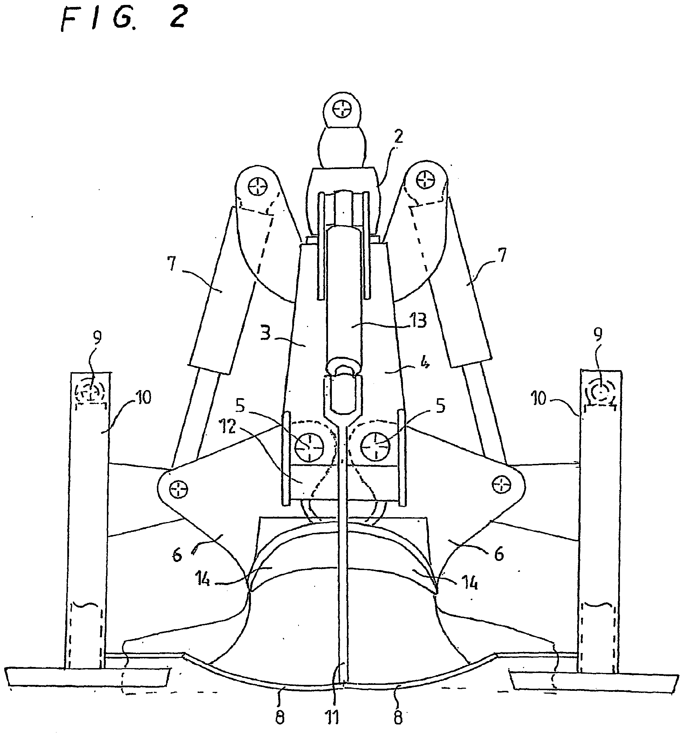

Attached to the stump-splitting blades 6, are extraction arms 10 for extracting the tree stumps, the extraction arms feature second set of actuators 9 for operating the extraction arms. In this application, the actuators 9 consist of hydraulic cylinders mounted inside hollow extraction arms and attached, at the top end, to the extraction arms 10 and, at the other end, to an arm connected to plate-like parts at the lower end of the extraction arms, with said plate-like parts being capable of being moved down and away from the extraction arms as shown in Figure 2. The downward-extending movement of the plate-like parts of the extraction arms lifts the grapple and the tree stump parts attached thereto off the ground during tree stump extraction.

Attached to the frame 4 by means of articulated joints 12 are turning compression arms 11 with a sharpened leading edge for splitting the tree stump into smaller parts. Additionally, the apparatus comprises a third set of actuators 13 for operating the compression arms. In this application, the actuators 13 consist of hydraulic cylinders attached, at one end, to the compression arms 11 and, at the other end, to the frame 4. The compression arms are rotated by the actuators 13 around the articulated joints 12. Furthermore, attached to the compression arms are holding arms 14 consisting of plate-like parts mounted perpendicularly to the plate-like compression arm and extending from the rear edge of the compression arms to a distance from the leading edge.

The apparatus illustrated in the figures incorporates two sets of stump-splitting blades 6 and other associated structures mounted onto opposite sides of the frame. The apparatus includes two compression arms 11 and associated structures mounted to the opposite sides of the frame. Consequently, the stump-splitting blade and the adjacent compression arm are at about 90° angle to each other.

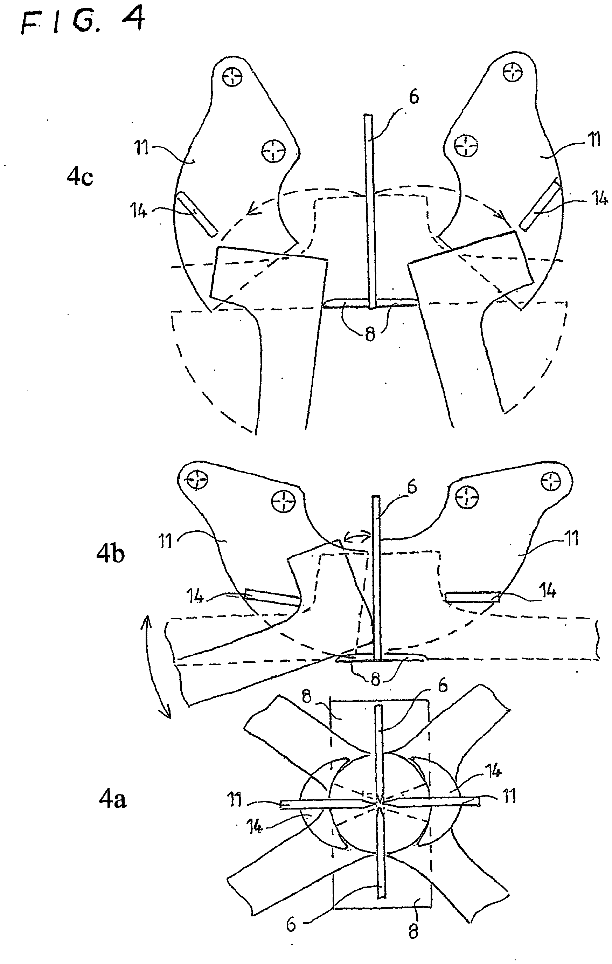

When a tree stump is to be extracted, the stump-splitting blades 6 are lowered on top of the tree stump with the compression arms 11 in the open position. After that, they are closed, which results in the sharpened leading edges of the stump-splitting blades 6 being pressed against each other and the sharpened leading edges of the compression arm 11 being pressed against each other, thus splitting tree stump into four parts. When the stump-splitting blades 6 are pressed together, the surface plates 8 attached thereto are turned under the tree stump. Similarly, when the compression arms 11 are turned face-to-face, the holding arms are pressed against the surface of the stump. This is shown in Fig. 4a. Once the stump has been split into four parts and the surface plates 8 are under the stump parts, the stump is pulled out by means of the extraction arms 10. The plate-like parts of the extraction arms are against the ground and when they are pushed downward, they lift the apparatus and the stump held by the holding arms 14 off the ground. Figure 1 shows a tree stump pulled out of the ground by means of the apparatus.

The compression arms and holdings arms 14 attached thereto are used to press the stump parts to the angle formed by the stump-splitting blades 6 and surface plates 8. After the lifting operation is completed, the compression arms can be used for cleaning the stump parts by opening and closing the arms.

The extraction operation can be carried out in two ways. One way is to hold the stump firmly pressed against the stump-splitting blades 6 and holding arms 14 while the other way is to open the compression arms 14 to allow the middle part of the stump to rise, after which the compression arms are closed, making it possible to pull out the stump in stages, as shown in Figure 4b.

There are two cleaning functions. In the first stage, cleaning is carried out by turning the holding arms 14 by quickly repeating the open/close sequence to make the stump parts turn around the edge of the surface plate and to make the tops of the stump parts shake up and down in order to remove the soil from the stump parts by means of the changes in direction and impact. In the second cleaning stage, all of the parts of the split stump are lifted to a height of several meters. When the holding arms are then opened, the root ends turn downwards, when the cutting blades are opened, the stump parts fall to the ground. As the stump parts hit the ground in a vertical position, more soil is effectively dislodged from the roots. This is shown in Fig. 4c.

The invention is not restricted to the preferred embodiments discussed above but can be varied within the scope of the attached claims.

## Claims

1. An apparatus for handling stumps, and particularly, for cutting up, extracting and cleaning tree stumps, comprising a stump extraction grapple (3) mounted onto a turning device (2) attached to a basic machine crane (1), a frame (4) of said grapple comprising stump-splitting blades (6) with a sharpened leading edge attached by articulated joints (5), a first set of actuators (7) for turning the stump-splitting blades (6) for the purpose of splitting the stump in between, extraction arms (10) for pulling out stumps, and a second set of actuators (9) for operating the extraction arms, compression arms (11) are attached to the frame (4), with said arms having a sharpened leading edge to split the stump and the apparatus includes a third set of actuators (13) to turn the compression arms, **characterized in that** said extraction arms (10) are mounted onto said stump-splitting blades (6), **in that** surface plates (8) are attached to the lower edge of said stump-splitting blades (6), holding arms (14) are attached to said compression arms, and **in that** said compression arms (11) and said holdings arms (14) are arranged to press the stump parts against the angle formed by the cutting blades (6) and the surface plates (8) for the duration of the extraction, lifting, and cleaning of tree stumps.

2. A apparatus according to claim 1 for handling tree stumps, **characterized in that** the apparatus comprises at least two sets of stump-splitting blades (6) mounted on opposite sides of the frame.

3. A apparatus according to claim 1 or claim 2 for handling tree stumps, **characterized in that** the apparatus comprises at least two sets of compression arms (11) mounted on opposite sides of the frame.

## Patentansprüche

1. Vorrichtung zur Handhabung von Stümpfen und insbesondere zum Zerlegen, Roden und Reinigen von Baumstümpfen, welche umfasst: eine Stumpfrodezange (3), die an einer Dreheinrichtung (2) angebracht ist, die an einem Basismaschinenkran (1) befestigt ist, einen Rahmen (4) der Zange, der Stumpfspaltmesser (6) mit einer geschärften Vorderkante umfasst, die durch Gelenke (5) befestigt sind, eine erste Gruppe von Aktoren (7) zum Drehen der Stumpfspaltmesser (6) zum Zwecke des Aufspaltens des Stumpfes, Rodearme (10) zum Herausziehen von Stümpfen und eine zweite Gruppe von Aktoren (9) zum Betätigen der Rodearme, und Kompressionsarme (11), die an dem Rahmen (4) befestigt sind, wobei die Arme eine geschärfte Vorderkante aufweisen, um den Stumpf zu spalten, und die Vorrichtung eine dritte Gruppe von Aktoren (13) zum Drehen der Kompressionsarme aufweist, **dadurch gekennzeichnet, dass** die Rodearme (10) an den Stumpfspaltmessern (6) angebracht sind, dadurch, dass Oberflächenplatten (8) an der Unterkante der Stumpfspaltmesser (6) befestigt sind und Haltearme (14) an den Kompressionsarmen befestigt sind, und dadurch, dass die Kompressionsarme (11) und die Haltearme (14) dafür eingerichtet sind, die Stumpfteile für die Dauer des Rodens, Hebens und Reinigens von Baumstümpfen gegen den Winkel zu pressen, der von den Schneidmessern (6) und den Oberflächenplatten (8) gebildet wird.

2. Vorrichtung nach Anspruch 1 zur Handhabung von Baumstümpfen, **dadurch gekennzeichnet, dass** die Vorrichtung mindestens zwei Sätze von Stumpfspaltmessern (6) umfasst, die auf gegenüberliegenden Seiten des Rahmens angebracht sind.

3. Vorrichtung nach Anspruch 1 oder Anspruch 2 zur Handhabung von Baumstümpfen, **dadurch gekennzeichnet , dass** die Vorrichtung mindestens zwei Sätze von Kompressionsarmen (11) umfasst, die auf gegenüberliegenden Seiten des Rahmens angebracht sind.

## Revendications

1. Appareillage pour manipuler des souches, et en particulier pour couper, extraire et nettoyer des souches d'arbre, comprenant un grappin d'extraction de souches (3) monté sur un dispositif rotatif (2) fixé sur une grue de machine basique (1), un châssis (4) dudit grappin comprenant des lames à fendre les souches (6) avec un bord d'attaque affûté fixé par des jointures articulées (5), un premier jeu d'actionneurs (7) pour faire tourner les lames à fendre les souches (6) dans le but de fendre la souche au milieu, des bras d'extraction (10) pour tirer les souches, et un second jeu d'actionneurs (9) pour faire fonctionner les bras d'extraction, des bras de compression (11) sont fixés sur le châssis (4), avec lesdits bras ayant un bord d'attaque affûté pour fendre la souche et l'appareillage comprend un troisième jeu d'actionneurs (13) pour faire tourner les bras de compression, **caractérisé en ce que** lesdits bras d'extraction (10) sont montés sur lesdites lames à fendre les souches (6), **en ce que** des plateaux de surface (8) sont fixés sur le bord inférieur desdites lames à fendre les souches (6), des bras de retenue (14) sont fixés sur lesdits bras de compression, et **en ce que** lesdits bras de compression (11) et lesdits bras de retenue (14) sont agencés pour comprimer les parties de souche contre l'angle formé par les lames de coupe (6) et les plateaux de surface (8) pendant la durée de l'extraction, du levage et du nettoyage des souches d'arbre.

2. Appareillage selon la revendication 1 pour manipuler des souches d'arbre, **caractérisé en ce que** l'appareillage comprend au moins deux jeux de lames à fendre les souches (6) montées sur des côtés opposés du châssis.

3. Appareillage selon la revendication 1 ou 2 pour manipuler des souches d'arbre, **caractérisé en ce que** l'appareillage comprend au moins deux jeux de bras de compression (11) montés sur des côtés opposés du châssis.
